(19) Europäisches Patentamt
European Patent Office
Office européen des brevets

(11) **EP 1 912 838 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(21) Anmeldenummer: **06724088.7**

(22) Anmeldetag: **06.04.2006**

(51) Int Cl.:
**B60T 10/02** (2006.01)     **B60T 8/32** (2006.01)

(86) Internationale Anmeldenummer:
**PCT/EP2006/003143**

(87) Internationale Veröffentlichungsnummer:
**WO 2007/012354 (01.02.2007 Gazette 2007/05)**

(54) **VERFAHREN ZUR STEUERUNG EINER DAUERBREMSE EINES KRAFTFAHRZEUGES**

METHOD FOR CONTROLLING A RETARDER OF A MOTOR VEHICLE

PROCEDE DE COMMANDE DE FREINS CONTINUS D'UN VEHICULE A MOTEUR

(84) Benannte Vertragsstaaten:
**DE IT NL SE**

(30) Priorität: **28.07.2005 DE 102005035349**

(43) Veröffentlichungstag der Anmeldung:
**23.04.2008 Patentblatt 2008/17**

(73) Patentinhaber: **WABCO GmbH**
**30453 Hannover (DE)**

(72) Erfinder:
• **FRANKE, Torsten**
  **31303 Burgdorf (DE)**
• **KOPPER, Heiko**
  **31515 Wunstorf (DE)**
• **WALLBAUM, Torsten**
  **31089 Duingen (DE)**
• **WEHRMANN, Rüdiger**
  **30457 Hannover (DE)**

(74) Vertreter: **Günther, Constantin**
**WABCO GmbH**
**Postfach 91 12 62**
**30432 Hannover (DE)**

(56) Entgegenhaltungen:
**EP-A- 0 585 989     DE-A1- 19 832 875**

• **PATENT ABSTRACTS OF JAPAN Bd. 1996, Nr. 05, 31. Mai 1996 (1996-05-31) & JP 08 020324 A (TOKYO BUHIN KOGYO KK), 23. Januar 1996 (1996-01-23)**
• **PATENT ABSTRACTS OF JAPAN Bd. 1995, Nr. 04, 31. Mai 1995 (1995-05-31) & JP 07 025322 A (JATCO CORP), 27. Januar 1995 (1995-01-27)**

## Beschreibung

Die Erfindung betrifft ein Verfahren zur Steuerung wenigstens einer Dauerbremse eines Kraftfahrzeuges gemäß dem Patentanspruch 1.

Derartige Dauerbremsen werden als Motorbremsen und/oder Retarder vor allem in Nutzfahrzeugen eingesetzt und dienen unter anderem dazu, das Kraftfahrzeug verschleißfrei zu verzögern und, z. B. im Zusammenhang mit Zusatzeinrichtungen (Geschwindigkeitsregler), die Geschwindigkeit des Kraftfahrzeuges auf eine konstante Geschwindigkeit zu regeln. Die Dauerbremse ist in diesem Zusammenhang im Gegensatz zur Betriebsbremse eines Fahrzeugs zu sehen, die üblicherweise als verschleißbehaftete Reibungsbremse ausgelegt ist. Die Dauerbremse wirkt üblicherweise auf die angetriebene Achse des Kraftfahrzeugs, bzw. bei Fahrzeugen mit mehreren angetriebenen Achsen auf die angetriebenen Achsen. Bei Nutzfahrzeugen ist die angetriebene Achse in den meisten Fällen die Hinterachse.

Bei Straßenverhältnissen mit niedrigen Reibwerten zwischen Reifen und Fahrbahn oder einem nur teilbeladenen Fahrzeug besteht die Gefahr einer Blockierneigung an der durch die Dauerbremse mit Bremskraft beaufschlagten Achse. Die Blockierneigung kann zu einem Ansprechen eines in dem Kraftfahrzeug vorgesehenen Antiblockiersystems führen. In diesem Zusammenhang ist es bekannt, der Blockierneigung dadurch entgegenzuwirken, dass die Dauerbremse zeitweise abgeschaltet wird. Ein solches vollständiges Abschalten der Dauerbremse hat jedoch den Nachteil, dass die an sich erwünschte verschleißfreie Abbremsung des Fahrzeuges während solcher Phasen nicht möglich ist und die gewünschte Verzögerung nur durch die Aktivierung der Reibungsbremse durch den Fahrer aufrecht erhalten werden kann.

Eine Verbesserung des zuvor beschriebenen Zustands ist dadurch möglich, dass die Dauerbremse nicht ganz abgeschaltet wird, sondern die von ihr erzeugte Bremskraft auf einen Grenzwert begrenzt wird. Um diesen Grenzwert zu bestimmen, ist es möglich, den von der Dauerbremse bewirkten Bremsschlupf, d. h. den Dauerbremsschlupf, im Rahmen von Bremsalgorithmen aus Kraft- und Schlupfänderungen vorauszuberechnen, so dass hieraus ein solcher Grenzschlupf für die Dauerbremse vorgegeben werden kann, welcher gerade nicht zu einem Ansprechen des Antiblockiersystems führen soll. Ein Beispiel für eine derartige Vorausberechnung des Dauerbremsschlupfs ist aus der DE 198 32 875 A1 bekannt, wobei dort allerdings von einer simultanen Nutzung der Reibungs- und Dauerbremse ausgegangen wird. Bei der Vorausberechnung kann es jedoch vorkommen, dass in statischen Brems- oder Antriebsphasen des Kraftfahrzeugs Veränderungen der Reibwertverhältnisse aufgrund nicht auftretender Kraft- und Schlupfänderungen nicht in ausreichendem Maße erkannt werden können, wodurch eine Adaption des vorausberechneten Dauerbremsschlupfs an die realen Verhältnisse erschwert wird. Zudem wird diese Vorausberechnung durch eine zeitliche Divergenz zwischen dem vorausberechneten Dauerbremsschlupf und der tatsächlichen Auswirkung der von der Dauerbremse erzeugten Bremskraft auf das Fahrzeugverhalten zusätzlich erschwert.

Ein Verfahren zur Steuerung eines ABS-Systems einer Dauerbremse eines Kraftfahrzeuges in dem eine Schwelleneinstellungsvorrichtung für Antriebsschlupf und ein Vergleich der niedrigsten Geschwindigkeit und der Antriebsradgeschwindigkeit benützt werden ist aus JP 08 020324 A bekannt.

Es ist ebenfalls möglich, die von der Dauerbremse erzeugte Bremskraft über die Auswertung des Signals eines Achslastsensors ohne Berücksichtigung der vorliegenden Reibwertverhältnisse zu begrenzen. Nachteilig ist hierbei, dass bei hohen Reibwerten die Begrenzung dazu führt, dass die von der Dauerbremse erzeugte Bremskraft geringer ist als die aufgrund der Reibwerte auf die Fahrbahn an sich übertragbare Bremskraft. Bei niedrigen Reibwerten wird dagegen eine zu hohe Bremskraft der Dauerbremse'zugelassen als auf die Fahrbahn übertragen werden kann, was wiederum zu einem Ansprechen des Antiblockiersystems führen kann.

Die Aufgabe der vorliegenden Erfindung besteht darin, ein Verfahren zur Steuerung einer Dauerbremse eines Kraftfahrzeugs anzugeben, das die zuvor genannten Nachteile vermeidet und einen breiteren Anwendungsbereich als die zuvor erläuterten Verfahren ermöglicht.

Diese Aufgabe wird durch die in dem Patentanspruch 1 angegebene Erfindung gelöst. Vorteilhafte und zweckmäßige Weiterbildungen der Erfindung sind in den Unteransprüchen angegeben.

Die Erfindung hat den Vorteil, einen optimierten Einsatz der Dauerbremse zu ermöglichen, ohne dass die Gefahr ei-nes Ansprechens eines Antiblockiersystems durch die Bremswirkung der Dauerbremse besteht. Ein weiterer Vorteil des erfindungsgemäßen Verfahrens ist, dass eine relativ schnelle Anpassung an die jeweiligen Reibwertverhältnisse auch in einer Dauerbremsphase möglich ist und somit ein an die aktuell herrschenden Verhältnisse angepasster Einsatz der Dauerbremse möglich ist. Durch eine derartige Optimierung des Einsatzes der Dauerbremse kann der Einsatzbedarf der verschleißbehafteten Betriebsbremse verringert werden, was zu verringertem Verschleiß der Bremsbeläge, geringerem Wartungsaufwand und demzufolge zu geringeren Betriebskosten des Kraftfahrzeugs führt.

Durch die erfindungsgemäße Lösung wird die zugelassene Bremskraft der Dauerbremse kontrolliert an einen Grenzschlupf herangeführt, der hinreichend gering ist, um ein Ansprechen des Antiblockiersystems zu vermeiden, jedoch je nach Reibwertverhältnissen und Achslast einen adäquaten Dauerbremseinsatz ermöglicht. Hierdurch wird eine Maximierung der Dauerbremskraft bei optimaler Fahrstabilität erreicht. Vorteilhaft ist weiterhin, dass die Erfindung unabhängig von der Betätigungsart der Dauerbremse in dem Fahrzeug anwendbar ist, d. h. die Erfindung ist anwendbar bei einer Aktivierung der Dauerbremse durch jedes im Fahrzeug integrierte Regelungssystem, welches eine Betätigung der Dauerbremse vorsehen kann, wie z. B. ein elektronisch gesteuertes Bremssystem (EBS), ein Antiblockiersystem (ABS), ein Abstandsregeltempomat (ACC) oder ein konventioneller Tempomat bzw. Bremsomat, sowie durch manuelle Bedienelemente.

Gemäß der Erfindung wird, kurz gesagt, ein vorausberechneter Dauerbremsschlupf verwendet, der eine Schätzung des von der Dauerbremse bewirkten Schlupfs zwischen der von der Dauerbremse beaufschlagten Fahrzeugachse und einer freilaufenden, d. h. nicht von der Dauerbremse beaufschlagten, Fahrzeugachse darstellt und entstehen würde, wenn die Dauerbremse mit einem vorgegebenen Moment betätigt werden würde. Dieser vorausberechnete Dauerbremsschlupf wird mit den realen Verhältnissen abgeglichen, d. h. es wird eine für die Vorausberechnung verwendete Kraftkonstante derart geändert, dass der vorausberechnete Dauerbremsschlupf einem während einer Dauerbremsung gemessenen Dauerbremsschlupf entspricht. In vorteilhafter Weise kann aus dem so vorausberechneten Dauerbremsschlupf ein daraus resultierendes Grenzmoment bestimmt werden, welches wiederum einem elektronischen Steuergerät für die Steuerung der Dauerbremse oder anderen Systemen in dem Fahrzeug über einen in dem Fahrzeug vorgesehenen Datenbus, z. B. ein SAE-Bus, zur Verfügung gestellt werden kann.

Die Erfindung wird nachfolgend anhand des beigefügten Funktionsdiagramms näher beschrieben.

Nachfolgend wird unter einem Dauerbremsmoment das von der Dauerbremse unmittelbar abgegebene Bremsmoment verstanden. Unter einer Dauerbremskraft wird dann die von den dauergebremsten Rädern auf die Fahrbahn übertragene Kraft verstanden, d. h. diejenige Kraft, die sich aus dem Dauerbremsmoment nach Übertragung über die verschiedenen mechanische Übertragungselemente des Fahrzeuges, wie z. B. Kardanwelle, Differentialgetriebe, Räder, auf die Fahrbahn ergibt, d.h. die unter Berücksichtigung der mechanischen Übersetzungsverhältnisse dem Dauerbremsmoment entsprechende Kraft. Entsprechend wird unter einem Dauerbrems-Grenzmoment ein Grenzwert für das Dauerbremsmoment verstanden, und unter einer Dauerbrems-Grenzkraft die unter Berücksichtigung der mechanischen Übersetzungsverhältnisse dem Dauerbrems-Grenzmoment entsprechende Kraft. Das Dauerbrems-Grenzmoment kann der Dauerbremse als Grenzwert vorgegeben werden, z. B. indem über den FahrZeug-Datenbus das vorzugebende Dauerbrems-Grenzmoment an eine elektronische Steuerungseinrichtung der Dauerbremse übertragen wird.

Die Erfindung geht aus von einer Kraftkonstanten FK, welche zur Bestimmung der Dauerbrems-Grenzkraft (Block 12) und in dessen Folge zur Bestimmung des über den Fahrzeug-Datenbus zu übertragenden Dauerbrems-Grenzmoments (Block 14) verwendet wird. Die Bestimmung der Kraftkonstanten FK ist im Block 1 dargestellt.

Während einer Antriebsphase des Kraftfahrzeugs wird die Kraftkonstante FK aus einer über die Räder der Antriebsachse auf die Fahrbahn übertragenen Antriebskraft $F_{Antrieb}$, die aus dem vom Motor abgegebenen Antriebsmoment berechnet wird, sowie dem dadurch erzeugten Antriebsschlupf $S_{Antrieb}$ bestimmt. Gemäß einer vorteilhaften Ausführungsform der Erfindung wird die Kraftkonstante FK als Quotient des Zeitgradienten des Antriebsschlupfs und des Zeitgradienten der Antriebskraft gemäß der Formel

$$FK = \frac{dS_{Antrieb}}{dF_{Antrieb}} \qquad\qquad [1]$$

bestimmt, wobei in der Praxis statt der differentiellen Größen häufig Differenzenquotienten verwendet werden. Die Antriebskraft wird z.B. aus dem Motormoment, welches über den Fahrzeug-Datenbus empfangen wird, der Gesamtübersetzung und dem Abrollumfang der Räder bestimmt. Der Antriebsschlupf wird durch Differenzbildung der Drehgeschwindigkeiten der Räder der angetriebenen Achse sowie einer nicht angetriebenen Achse bestimmt, z.B. gemäß der Formel

$$S_{Antrieb} = \frac{V_{VA} - V_{HA}}{V_{VA}} \qquad\qquad [2]$$

wobei $V_{VA}$ die Drehgeschwindigkeit der Räder der nicht angetriebenen Achse, d. h. in der Regel der Vorderachse, und $V_{Ha}$ die Drehgeschwindigkeit der Räder der angetriebenen Achse, d. h. in der Regel der Hinterachse, darstellt.

In einer Weiterbildung der Berechnung des Antriebsschlupfs kann noch der Einfluss der Kurvenfahrt in Form des Kurvenschlupfs $S_{Kurve}$ sowie der Einfluss der Abrollradien der Räder in Form des Rollschlupfs $S_{Roll}$ berücksichtigt werden. Der Kurvenschlupf $S_{Kurve}$ entsteht durch die unterschiedlichen Kurvenradien, auf denen die einzelnen Fahrzeugräder eine Kurve durchfahren. Der Rollschlupf wird durch Unterschiede in den Abrollradien zwischen den Reifen hervorgerufen, z. B. durch Reifentoleranzen. Die Berücksichtigung diese Größen erfolgt beispielsweise gemäß der

3

Formel

$$S_{Antrieb} = \frac{V_{VA} - V_{HA}}{V_{VA}} - S_{Kurve} - S_{Roll} \qquad [3]$$

Die für die vorerwähnten Berechnungsschritte erforderlichen Informationen erhält das erfindungsgemäße Verfahren beispielsweise durch Auswertung von Geschwindigkeitssignalen von Raddrehgeschwindigkeitssensoren (Block 3) oder von Daten, die von dem Fahrzeug-Datenbus empfangen werden. Zu den vom Fahrzeug-Datenbus empfangenen Daten gehören beispielsweise das Antriebsmoment des Motors, das von der Dauerbremse tatsächlich erzeugte Moment oder die Motordrehzahl.

Mit Hilfe der Kraftkonstanten FK wird dann, unter Berücksichtigung der Reifenkennlinie (Block 4), ermittelt, welche Dauerbrems-Grenzkraft $F_{Grenz}$ an der Antriebsachse zu einem bestimmten Bremsschlupf führt (Block 12). Die Bestimmung der Dauerbrems-Grenzkraft $F_{Grenz}$ erfolgt beispielsweise gemäß der Formel

$$F_{Grenz} = \frac{S_{Grenz}}{FK} \qquad [4]$$

Bei der Größe $S_{Grenz}$ handelt es sich um einen vorgebbaren Grenzschlupf, der so zu bestimmen ist, dass ein Ansprechen des Antiblockiersystems vermieden wird. In einer vorteilhaften Weiterbildung erfolgt die Bestimmung des Grenzschlupfs geschwindigkeitsabhängig sowie abhängig von einem einstellbaren Parameter (Block 10). Dieser Parameter gibt den bei einer vorbestimmten Geschwindigkeit zulässigen Bremsschlupf an, der durch die Dauerbremse maximal verursacht werden darf.

Die Berücksichtigung der Reifenkennlinie im Block 4 erfolgt beispielsweise dadurch, dass die sogenannte Reibwert (μ)/Schlupf-Kurve zugrundegelegt wird. Die an einer Fahrzeugachse auf die Fahrbahn übertragbare Kraft ist abhängig vom Produkt aus dem Reibwert μ und der Normalkraft $F_{Normal}$ dieser Achse. Hierzu weist ein das erfindungsgemäße Verfahren ausführendes elektronisches Steuergerät wenigstens eine gespeicherte Reibwert/Schlupfkurve auf, welche eine Zuordnung zwischen dem einem Schlupfwert und dem zugehörigen Reibwert ermöglicht.

Aus der im Block 12 bestimmten Dauerbrems-Grenzkraft wird in einem Block 14 das Dauerbrems-Grenzmoment unter Berücksichtigung der für die jeweilige Dauerbremse wirksamen Übersetzungsverhältnisse im Fahrzeug ermittelt. Dieses Grenzmoment kann dann über den Fahrzeug-Datenbus an eine elektronische Steuereinrichtung für die Dauerbremse oder andere Steuergeräte übermittelt werden. Das jeweilige Steuergerät kann dann das von der Dauerbremse zu erzeugende Bremsmoment derart einstellen, dass das Dauerbrems-Grenzmoment nicht überschritten wird und somit ein Ansprechen des Antiblockiersystems vermieden wird.

Bisher wurde lediglich der Fall einer Antriebsphase des Kraftfahrzeugs betrachtet. Ein anderer davon verschiedener Fall ist eine Dauerbremsphase, d. h. ein Fahrzustand, in dem allein durch die Dauerbremse das Fahrzeug gebremst wird und die Reibungsbremse nicht betätigt ist. In diesem Fall erfolgt eine Bestimmung des von der Dauerbremse bewirkten Bremsschlupfs (Block 6) wiederum unter Berücksichtigung der Reifenkennlinien (Block 4). Dieser als gemessener Dauerbremsschlupf $S_{DBRgemessen}$ bezeichnete Schlupfwert wird z. B. gemäß der Formel

$$S_{DBRgemessen} = \frac{V_{VA} - V_{HA}}{V_{VA}} \qquad [5]$$

bestimmt, bzw. in einer Weiterbildung unter Berücksichtigung des Kurvenschlupfs und des Rollschlupfs gemäß der Formel

$$S_{DBRgemessen} = \frac{V_{VA} - V_{HA}}{V_{VA}} - S_{Kurve} - S_{Roll} \qquad [6]$$

berechnet. Dieser gemessene Dauerbremsschlupf wird mit dem eingangs erwähnten vorausberechneten Dauerbremsschlupf verglichen. Sofern bei diesem Vergleich eine spürbare Abweichung zwischen dem vorausberechneten Dauerbremsschlupf und dem gemessenen Dauerbremsschlupf festgestellt wird, wird die Kraftkonstante FK derart geändert, dass sich der vorausberechnete Dauerbremsschlupf relativ schnell an den gemessenen Dauerbremsschlupf angleicht. Hierbei wird in den Blöcken 6, 8 von dem zunächst während der Antriebsphase bestimmten Wert der Kraftkonstanten FK ausgegangen und dieser in vorgegebenen Zeitintervallen schrittweise um eine vorgegebenen Schrittweite solange verändert, bis die Abweichung zwischen dem vorausberechneten Dauerbremsschlupf und dem gemessenen Dauerbremsschlupf hinreichend gering ist, d.h. einen vorgegebenen Schwellenwert betragsmässig unterschreitet.

Beim Übergang von einer Dauerbremsphase in eine Antriebsphase wird wiederum, wie oben beschrieben, im Block 1 die Kraftkonstante FK aus den bei der Antriebsphase vorliegenden Daten bestimmt, wobei die Dominanz der durch den zuvor genannten Abgleich in der Dauerbremsphase ermittelten Kraftkonstanten FK innerhalb der folgenden Antriebsphase mit einer Zeitfunktion abnimmt, derart, dass der durch den Abgleich bestimmte Wert der Kraftkonstanten FK über die Zeitfunktion, z. B. eine abklingende Exponentialfunktion, auf den gemäß Block 1 bestimmten Wert der Kraftkonstanten FK zurückgeführt wird.

Dadurch wird vermieden, dass die in einer Dauerbremsphase abgeglichene Kraftkonstante FK auch dann noch in die weitere Berechnung des Dauerbrems-Grenzmoments eingeht, nachdem der zeitliche Zusammenhang mit dem Zeitpunkt des Abgleichs verloren gegangen ist.

**Patentansprüche**

1. Verfahren zur Steuerung wenigstens einer Dauerbremse eines Kraftfahrzeugs, bei dem eine Begrenzung des von der Dauerbremse abgegebenen Bremsmoments auf ein Dauerbrems-Grenzmoment erfolgt, wobei das Dauerbrems-Grenzmoment unter Verwendung einer Kraftkonstante FK bestimmt wird, welche in einer Antriebsphase des Kraftfahrzeugs unter Verwendung des Antriebsmoments des Fahrzeugmotors sowie des Antriebsschlupfs $S_{Antrieb}$ bestimmt wird, und in einer Dauerbremsphase, bei der die Reibungsbremse nicht aktiviert ist, ein Vergleich zwischen einem vorausberechneten Dauerbremsschlupf und einem tatsächlich auftretenden gemessenen Dauerbremsschlupf durchgeführt wird, und bei einer Abweichung zwischen dem vorausberechneten Dauerbremsschlupf und dem gemessenen Dauerbremsschlupf die Kraftkonstante FK automatisch derart geändert wird, dass sich der vorausberechnete Dauerbremsschlupf an den gemessenen Dauerbremsschlupf angleicht.

2. Verfahren nach Anspruch 1, **dadurch gekennzeichnet, dass** in einer Antriebsphase die Kraftkonstante FK aus der von den Antriebsrädern auf die Fahrbahn übertragenen Antriebskraft $F_{Antrieb}$, welche aufgrund des Antriebsmoments des Motors und den Übersetzungsverhältnissen bestimmt wird, und dem Antriebsschlupf $S_{Antrieb}$ bestimmt wird.

3. Verfahren nach Anspruch 2, **dadurch gekennzeichnet, dass** die Berechnung der Kraftkonstanten FK unter Verwendung des Zeitgradienten $dS_{Antrieb}$ des Antriebsschlupfs sowie des Zeitgradienten $dF_{Antrieb}$ der Antriebskraft gemäß der Gleichung

$$FK = \frac{dS_{Antrieb}}{dF_{Antrieb}}$$

bestimmt wird.

4. Verfahren nach wenigstens einem der vorhergehenden Ansprüche, **dadurch gekennzeichnet, dass** aus der Kraftkonstanten FK unter Berücksichtigung einer abgelegten Reifenkennlinie eine Dauerbrems-Grenzkraft bestimmt wird.

5. Verfahren nach Anspruch 4, **dadurch gekennzeichnet, dass** aus der Dauerbrems-Grenzkraft unter Berücksichtigung der Übersetzungsverhältnisse der Dauerbremse ein Dauerbrems-Grenzmoment für die Dauerbremse ermittelt wird.

6. Verfahren nach wenigstens einem der vorhergehenden Ansprüche, **dadurch gekennzeichnet, dass** das Kraftfahrzeug mit einem elektronisch gesteuerten Bremssystem (EBS) ausgestattet ist.

7. Verfahren nach Anspruch 4, **dadurch gekennzeichnet, dass** die Dauerbrems-Grenzkraft unter Verwendung eines Dauerbrems-Grenzschlupfs bestimmt wird.

8. Verfahren nach Anspruch 7, **dadurch gekennzeichnet, dass** der Dauerbrems-Grenzschlupf geschwindigkeitsabhängig und/oder parameterabhängig bestimmt wird.

9. Verfahren nach wenigstens einem der vorhergehenden Ansprüche, **dadurch gekennzeichnet, dass** bei der Bestimmung des gemessenen Dauerbremsschlupfs eine Bereinigung um den Kurvenschlupf $S_{Kurve}$ und/oder den Rollschlupf $S_{Roll}$ erfolgt.

**Claims**

1. Method for controlling at least one retarder of a motor vehicle, in which method the braking torque imparted by the retarder is limited to a retarder limit torque, with the retarder limit torque being determined using a force constant FK which is determined in a drive phase of the motor vehicle using the drive torque of the vehicle engine and the drive slip $S_{Drive}$, and with a comparison between a pre-calculated retarder slip and an actually occurring measured retarder slip being carried out in a retarder braking phase in which the friction brake is not activated, and in the event of a deviation between the pre-calculated retarder slip and the measured retarder slip, the force constant FK being automatically varied such that the pre-calculated retarder slip is aligned with the measured retarder slip.

2. Method according to Claim 1, **characterized in that,** in a drive phase, the force constant FK is determined from the drive force $F_{Drive}$, which is transmitted by the drive wheels to the roadway and which is determined on the basis of the drive torque of the engine and the transmission ratios, and from the drive slip $S_{Drive}$.

3. Method according to Claim 2, **characterized in that** the calculation of the force constants FK is determined using the time gradient $dS_{Drive}$ of the drive slip and the time gradient $dF_{Drive}$ of the drive force according to the equation

$$FK = \frac{dS_{Drive}}{dF_{Drive}} \ .$$

4. Method according to at least one of the preceding claims, **characterized in that** a retarder limit force is determined from the force constant FK taking into consideration a stored tyre characteristic curve.

5. Method according to Claim 4, **characterized in that** a retarder limit torque for the retarder is determined from the retarder limit force taking into consideration the transmission ratios of the retarder.

6. Method according to at least one of the preceding claims, **characterized in that** the motor vehicle is equipped with an electronically controlled brake system (EBS).

7. Method according to Claim 4, **characterized in that** the retarder limit force is determined using a retarder limit slip.

8. Method according to Claim 7, **characterized in that** the retarder limit slip is determined in a speed-dependent and/or parameter-dependent fashion.

9. Method according to at least one of the preceding claims, **characterized in that** an adjustment by the curve slip $S_{Curve}$ and/or by the roll slip $S_{Roll}$ is carried out in the determination of the measured retarder slip.

**Revendications**

1. Procédé pour commander au moins un freinage continu d'un véhicule automobile, selon lequel le moment de freinage délivré par le freinage continu est limité à un moment limite de freinage continu, le moment limite de freinage continu étant déterminé en utilisant une constante de force FK, laquelle est définie dans une phase de propulsion du véhicule automobile en utilisant le couple d'entraînement du moteur du véhicule ainsi que le patinage d'entraînement $S_{Entraînement}$ et, dans une phase de freinage continu, au cours de laquelle le freinage à friction n'est pas activé, une comparaison a lieu entre un patinage calculé à l'avance du freinage continu et un patinage mesuré réel du freinage continu et, en cas de différence entre le patinage calculé à l'avance du freinage continu et le patinage mesuré du freinage continu, la constante de force FK est modifiée automatiquement de telle sorte que le patinage calculé à l'avance du freinage continu s'aligne sur le patinage mesuré du freinage continu.

2.  Procédé selon la revendication 1, **caractérisé en ce que** dans une phase de propulsion, la constante de force FK est déterminée à partir de la force motrice $F_{Motrice}$ transmise par les roues motrices à la chaussée, laquelle est déterminée en se basant sur le couple d'entraînement du moteur et sur les rapports de transmission, et du patinage d'entraînement $S_{Entrainement}$.

3.  Procédé selon la revendication 2, **caractérisé en ce que** le calcul des constantes de force FK est réalisé en utilisant le gradient dans le temps $dS_{Entraînement}$ du patinage d'entraînement ainsi que le gradient dans le temps $dF_{Motrice}$ de la force motrice selon l'équation

$$FK = dS_{Entraînement}/dF_{Motrice}.$$

4.  Procédé selon au moins l'une des revendications précédentes, **caractérisé en ce qu'**une force limite de freinage continu est déterminée à partir des constantes de force FK en tenant compte d'une courbe caractéristique mémorisée des pneumatiques.

5.  Procédé selon la revendication 4, **caractérisé en ce qu'**un moment limite de freinage continu est déterminé pour le freinage continu à partir de la force limite de freinage continu en tenant compte des rapports de transmission du freinage continu.

6.  Procédé selon au moins l'une des revendications précédentes, **caractérisé en ce que** le véhicule automobile est équipé d'un système de freinage à commande électronique (EBS).

7.  Procédé selon la revendication 4, **caractérisé en ce que** la force limite de freinage continu est déterminée en utilisant un patinage limite de freinage continu.

8.  Procédé selon la revendication 7, **caractérisé en ce que** le patinage limite de freinage continu est déterminé en fonction de la vitesse et/ou en fonction de paramètres.

9.  Procédé selon au moins l'une des revendications précédentes, **caractérisé en ce qu'**une correction des données a lieu lors de la détermination du patinage de freinage continu mesuré avec le patinage en virage $S_{Virage}$ et/ou le patinage de roulis $S_{Roulis}$.

Aufbereitung der
Drehgeschwindigkeitssignale der Räder

Bestimmung des parameter-
und geschwindigkeitsabhängigen Grenzschlupfs

3

10

Aufbereitung
Datenbus-Daten (z.B.
Motormoment,
Dauerbremsmoment, Motordrehzahl)

2

Bestimmung der
Kraftkonstanten
FK

1

Berücksichtigung der
Reifenkennlinie(n)

4

12

Bestimmung der
Dauerbrems-
Grenzkraft mit
Hilfe der
Kraftkonstanten FK

Bestimmung des gemessenen
Dauerbremsschlupfs

6

Abgleich zwischen dem
gemessenen und dem
vorausberechneten
Dauerbremsschlupf

8

14

Bestimmung des
Dauerbrems-
Grenzmoments
unter Berücksichtigung der
Übersetzung

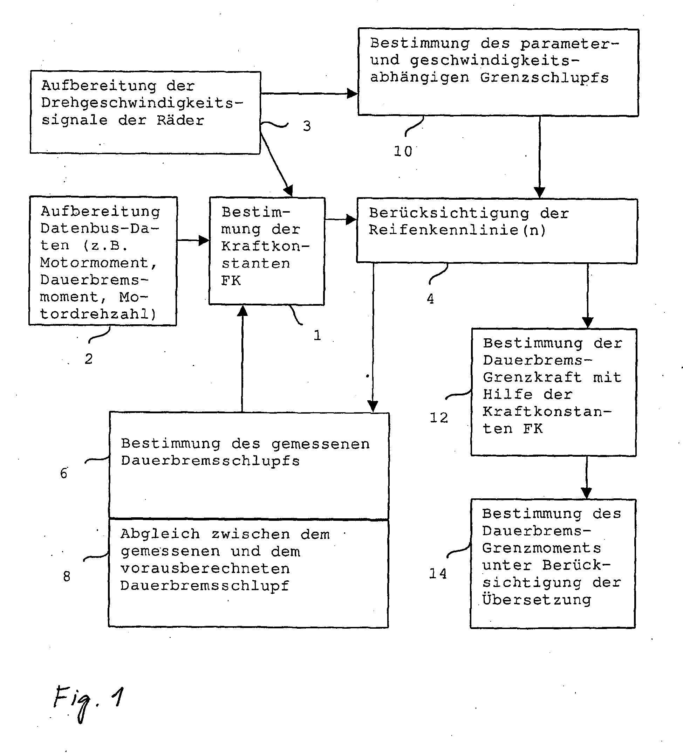

Fig. 1

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19832875 A1
- JP 8020324 A